# EUROPEAN PATENT APPLICATION

(11) **EP 4 588 559 A1**
(43) Date of publication of application: **23.07.2025**
(21) Application number: 24823708.3
(22) Date of filing: 12.06.2024
(51) Int. Cl.: B01J 8/06, B01J 8/08, B01J 8/18, B01J 19/24, C10G 15/08

(54) **ELECTRIC HEATING REACTOR**

(30) Priority: 12.06.2023 KR 20230074916; 11.06.2024 KR 20240075968
(71) Applicant: LG Chem, Ltd., Seoul 07336 (KR)
(72) Inventor: PARK, Hongseok, Daejeon 34122 (KR); KANG, Mooseong, Daejeon 34122 (KR); CHOI, Jaehoon, Daejeon 34122 (KR)
(74) Representative: Plasseraud IP
(86) International application number: PCT/KR2024/008085
(87) International publication number: WO 2024/258191

(57) **Abstract**

Disclosed is an electrical heating reactor. The electrical heating reactor includes: at least one first reaction tube having a first passage through which a reactant passes and configured to heat the reactant passing through the first passage; at least one second reaction tube having a second passage through which a reactant passes and configured to heat the reactant passing through the second passage; a first power supply configured to supply power to the at least one first reaction tube; and a second power supply configured to supply power to the at least one second reaction tube, in which the first power supply and the second power supply may be independently controlled.

## Description

### [Technical Field]

### CROSS-REFERENCE TO RELATED APPLICATION

This application claims priority to and the benefit of Korean Patent Application No. 10-2023-0074916 filed in the Korean Intellectual Property Office on June 12, 2023, and Korean Patent Application No. 10-2024-0075968 filed in the Korean Intellectual Property Office on June 11, 2024, the entire contents of which are incorporated herein by reference.

The present disclosure relates to an electrical heating reactor, in which an inside of a reactor housing is divided into a plurality of reaction regions, and each reaction region is independently heated by utilizing an electrical heating technology.

### [Background Art]

In a chemical industry, natural gas is used as a fuel to maintain the temperature of various facilities (for example, crackers, reformers, reactors, or boilers) high. However, heating by combustion of natural gas is not only inefficient in terms of energy consumption, but also a major cause of carbon emissions. Therefore, efforts are being made to replace a heating method by combustion of natural gas with an electrical heating method.

The above information disclosed in this Description of the Related Art section is only for enhancement of understanding of the background of the disclosure and therefore it may contain information that does not form the prior art that is already known in this country to a person of ordinary skill in the art.

### [Disclosure]

### [Technical Problem]

The present disclosure attempts to provide an electrical heating reactor in which an inside of a reactor housing is divided into a plurality of reaction regions, and each reaction region is independently heated by utilizing an electrical heating technology.

### [Technical Solution]

According to an aspect of the present disclosure, an electrical heating reactor includes: at least one first reaction tube having a first passage through which a reactant passes and configured to heat the reactant passing through the first passage; at least one second reaction tube having a second passage through which a reactant passes and configured to heat the reactant passing through the second passage; a first power supply configured to supply power to the at least one first reaction tube; and a second power supply configured to supply power to the at least one second reaction tube, in which the first power supply and the second power supply may be independently controlled.

The first passage may define a first reaction region, and the second passage may define a second reaction region.

The electrical heating reactor may further include: a first reactor inlet communicating with the first reaction region to supply the reactant to the first reaction region; a first reactor outlet communicating with the first reaction region to discharge the reactant from the first reaction region; a second reactor inlet communicating with the second reaction region to supply the reactant to the second reaction region; and a second reactor outlet communicating with the second reaction region to discharge the reactant from the second reaction region.

The first reaction region and the second reaction region may not communicate with each other inside the electrical heating reactor.

In one example, the electrical heating reactor may further include: a first mixer configured to receive a first type of reactants from first type reactant supply sources, mix the first type of reactants, and supply a mixture of the first type of reactants to the first reaction tube; and a second mixer configured to receive the first type of reactants from the first type reactant supply sources, mix the first type of reactants, and supply a mixture of the first type of reactants to the second reaction tube.

The first reaction region and the second reaction region may be controlled to have the same temperature, and the first type of reactants may be supplied from each of the first and second mixers to the first reaction region and the second reaction region to cause the same reaction.

In another example, the electrical heating reactor may further include: a first mixer configured to receive a first type of reactants from first type reactant supply sources, mix the first type of reactants, and supply a mixture of the first type of reactants to the first reaction tube; and a second mixer configured to receive a second type of reactants from second type reactant supply sources, mix the second type of reactants, and supply a mixture of the second type of reactants to the second reaction tube.

The first reaction region and the second reaction region may be controlled to have different temperatures, and the first type of reactants may be supplied from the first mixer to the first reaction region, and the second type of reactants may be supplied from the second mixer to the second reaction region to cause different reactions at the same time.

The at least one first reaction tube and the at least one second reaction tube may be disposed in a length direction inside a reactor housing, a partition wall may be installed in the length direction inside the reactor housing to physically divide a space inside the reactor housing into first and second sections, and the at least one first reaction tube may be disposed in the first section, and the at least one second reaction tube may be disposed in the second section.

The electrical heating reactor may further include an insulator surrounding at least parts of the first and second reaction tubes to thermally insulate the first and second reaction tubes.

### [Advantageous Effects]

According to the present disclosure, the temperature inside the reactor may be efficiently and uniformly maintained by utilizing an electrical heating technology.

In addition, the inside of the reactor housing may be divided into a plurality of reaction regions, and each reaction region may be independently heated. Therefore, a single electrical heating reactor may support various reactions, which enables manufacturing of various products.

Other effects that may be obtained or are predicted by an embodiment of the present disclosure will be explicitly or implicitly described in a detailed description of the embodiment of the present disclosure. That is, various effects that are predicted according to an embodiment of the present disclosure will be described in the following detailed description.

### [Description of the Drawings]

Embodiments of the present disclosure may be better understood with reference to the following description taken in conjunction with the accompanying drawings, in which like reference numerals denote identical or functionally similar elements.
FIG. 1 is a schematic cross-sectional view of an electrical heating reactor according to an embodiment of the present disclosure;
FIG. 2 is a plan view illustrating a cross section of the electrical heating reactor according to an embodiment of the present disclosure;
FIG. 3 illustrates an example of using the electrical heating reactor according to an embodiment of the present disclosure; and
FIG. 4 illustrates another example of using the electrical heating reactor according to an embodiment of the present disclosure.

It is to be understood that the drawings referenced above are not necessarily drawn to scale, and present somewhat simplified representations of various preferred features illustrating the basic principles of the present disclosure. Specific design features of the present disclosure as included herein, including, for example, specific dimensions, orientations, locations, and shapes will be determined in part by the particularly intended application and use environment.

### [Mode for Invention]

Terms used herein are for describing particular embodiments and are not intended to limit the present disclosure. As used herein, singular forms are intended to include plural forms as well, unless the context clearly indicates otherwise. It is to be further understood that the terms "includes" and/or "including" used in the present specification specify the presence of stated features, integers, steps, operations, elements, and/or components, but do not preclude the presence or addition of one or more other features, integers, steps, operations, components, and/or combinations thereof. As used herein, the term "and/or" includes any or all combinations of one or more of the associated listed items.

In addition, it is understood that one or more of the following methods or the aspects thereof may be executed by at least one controller. The term "controller" may refer to a hardware device including a memory and a processor. The memory is configured to store program commands, and the processor is specially programmed so as to execute program commands to perform one or more processes described in more detail below. The controller may control operations of units, modules, components, devices, or similar matters as described herein. Further, it is understood that the following methods may be executed by a device including the controller together with one or more other components as recognized by those skilled in the art.

Further, the controller according to the present disclosure may be implemented as a non-transitory computer-readable recording medium including program commands executable by a processor. Examples of the computer-readable recording medium may include a read only memory (ROM), a random access memory (RAM), a compact disc (CD) ROM, magnetic tapes, floppy discs, flash drives, smart cards, and optical data storage devices, but the computer-readable recording medium is not limited thereto. The computer-readable recording medium may also be distributed across a computer network such that program commands are stored and executed by a distributed method such as a telematics server or a controller area network (CAN).

According to the present disclosure, an electrical heating reactor includes: at least one first reaction tube having a first passage through which a reactant passes and configured to heat the reactant passing through the first passage; at least one second reaction tube having a second passage through which a reactant passes and configured to heat the reactant passing through the second passage; a first power supply configured to supply power to the at least one first reaction tube; and a second power supply configured to supply power to the at least one second reaction tube. With such a configuration, according to the present disclosure, a temperature inside the reactor may be efficiently and uniformly maintained by utilizing an electrical heating technology.

The first power supply and the second power supply may be independently controlled. That is, the supply of power to the first reaction region defined by the first passage and the supply of power to the second reaction region defined by the second passage may be independently controlled.

The first reaction region and the second reaction region may be controlled to have different temperatures. In a case where the first reaction region and the second reaction region are controlled to have the same temperature, it is possible to achieve reaction region expansion by supplying the same type of reactants to the first reaction region and the second reaction region. In contrast, in a case where the first reaction region and the second reaction region are controlled to have different temperatures, the first type of reactants may be supplied to the first reaction region, and the second type of reactants may be supplied to the second reaction region, thereby allowing different reactions to occur within one reactor. Therefore, a single electrical heating reactor may support various reactions, which enables manufacturing of various products.

In one example, the electrical heating reactor may further include: a first mixer configured to receive a first type of reactants from first type reactant supply sources, mix the first type of reactants, and supply a mixture of the first type of reactants to the first reaction tube; and a second mixer configured to receive the second type of reactants from the second type reactant supply sources, mix the second type of reactants, and supply a mixture of the second type of reactants to the second reaction tube. Accordingly, in the first reaction region, first reactants may be controlled to a first temperature and a first reaction may occur, thereby producing a first product, and in the second reaction region, second reactants may be controlled to a second temperature and a second reaction may occur, thereby producing a second product.

The electrical heating reactor may further include an insulator surrounding the first and second reaction tubes to thermally insulate the first and second reaction tubes. Accordingly, energy efficiency may be improved by reducing unnecessary heat loss to the outside of the electrical heating reactor.

Hereinafter, an embodiment of the present disclosure will be described in detail with reference to the attached drawings.

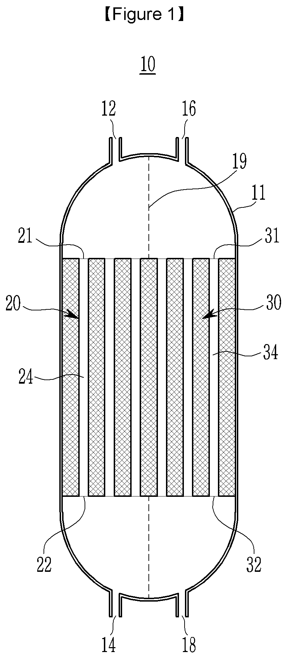

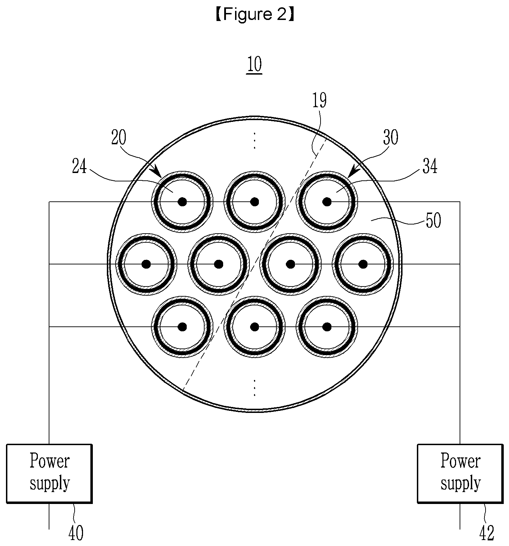

FIG. 1 is a schematic cross-sectional view of an electrical heating reactor according to an embodiment of the present disclosure. FIG. 2 is a plan view illustrating a cross section of the electrical heating reactor according to an embodiment of the present disclosure.

As illustrated in FIGS. 1 and 2, an electrical heating reactor 10 according to an embodiment of the present disclosure may be configured to receive power to generate heat and heat a reactant inside the electrical heating reactor 10 by using the heat. The electrical heating reactor 10 may include a reactor housing 11, at least one first reaction tube 20, and at least one second reaction tube 30.

The reactor housing 11 may be formed in a substantially cylindrical shape, and a partition wall 19 may be installed in a length direction inside the reactor housing 11 to physically divide a space inside the reactor housing 11 into two sections. Therefore, a first section and a second section do not communicate with each other inside the reactor housing 11. The at least one first reaction tube 20 may be provided in the first section, and the at least one second reaction tube 30 may be provided in the second section.

A first reactor inlet 12 communicating with the first section may be formed on one side of the reactor housing 11, and a first reactor outlet 14 communicating with the first section may be formed on the other side of the reactor housing 11. The first reactor inlet 12 and the first reactor outlet 14 may fluidly communicate with the first reaction tube 20, as a result of which a reactant introduced into the first section of the reactor housing 11 through the first reactor inlet 12 may pass through the first reaction tube 20 and be electrically heated, and then be discharged out of the first section of the reactor housing 11 through the first reactor outlet 14. Here, the reactant may be electrically heated within the first reaction tube 20 and a desired reaction may occur, and thus, a region within the first reaction tube 20 will be referred to as a first reaction region 24.

Further, a second reactor inlet 16 communicating with the second section may be formed on one side of the reactor housing 11, and a second reactor outlet 18 communicating with the second section may be formed on the other side of the reactor housing 11. The second reactor inlet 16 and the second reactor outlet 18 may fluidly communicate with the second reaction tube 30, as a result of which a reactant introduced into the second section of the reactor housing 11 through the second reactor inlet 16 may pass through the second reaction tube 30 and be electrically heated, and then be discharged out of the second section of the reactor housing 11 through the second reactor outlet 18. Here, the reactant is electrically heated within the second reaction tube 30 and a desired reaction may occur, and thus, a region within the second reaction tube 30 will be referred to as a second reaction region 34.

Meanwhile, the first reaction region 24 and the second reaction region 34 may not communicate with each other inside the reactor housing 11 and may communicate with each other outside the reactor housing 11. More specifically, the reactant introduced into the first reaction region 24 through the first reactor inlet 12 may not be introduced into the second reaction region 34 inside the reactor housing 11 and may be discharged out of the reactor housing 11 through the first reactor outlet 14. Similarly, the reactant introduced into the second reaction region 34 through the second reactor inlet 16 may not be introduced into the first reaction region 24 inside the reactor housing 11 and may be discharged out of the reactor housing 11 through the second reactor outlet 18.

In addition, the number of partition walls 19 is not limited to one, the number of sections inside the reactor housing 11 is not limited to two, and the number of types of reaction tubes is not limited to two. Those skilled in the art may appropriately set the number of partition walls 19, the number of sections inside the reactor housing 11, and the number of types of reaction tubes as necessary.

The first reaction tube 20 may be disposed in the first section and may be made of a metal material having high resistivity, and a first passage through which the reactant passes may be formed in the length direction inside the first reaction tube 20. For example, the first reaction tube 20 may be formed in an annular pipe shape, and the first passage may be formed in the length direction inside the first reaction tube 20. When power is applied to the first reaction tube 20, the first reaction tube 20 may generate heat due to the high resistivity, and the heat may heat the reactant in the first passage. Therefore, the first passage may define the first reaction region 24 in which the reaction of the reactant occurs.

One end of the first reaction tube 20 that is adjacent to the first reactor inlet 12 may define a first tube inlet 21, and the other end of the first reaction tube 20 that is adjacent to the first reactor outlet 14 may define a first tube outlet 22. The reactant introduced into the reactor housing 11 through the first reactor inlet 12 may be introduced into the first reaction tube 20 through the first tube inlet 21, pass through the first reaction region 24 defined by the first passage, and be electrically heated to cause a desired reaction. The reactant reacting in the first reaction region 24 may be discharged out of the reactor housing 11 through the first tube outlet 22 and the first reactor outlet 14.

The second reaction tube 30 may be disposed in the second section and may be made of a metal material having high resistivity, and a second passage through which the reactant passes may be formed in the length direction inside the second reaction tube 30. For example, the second reaction tube 30 may be formed in an annular pipe shape, and the second passage may be formed in the length direction inside the second reaction tube 30. When power is applied to the second reaction tube 30, the second reaction tube 30 may generate heat due to the high resistivity, and the heat may heat the reactant in the second passage. Therefore, the second passage may define the second reaction region 34 in which the reaction of the reactant occurs.

One end of the second reaction tube 30 that is adjacent to the second reactor inlet 16 may define a second tube inlet 31, and the other end of the second reaction tube 30 that is adjacent to the second reactor outlet 18 may define a second tube outlet 32. The reactant introduced into the reactor housing 11 through the second reactor inlet 16 may be introduced into the second reaction tube 30 through the second tube inlet 31, pass through the second reaction region 34 defined by the second passage, and be electrically heated to cause a desired reaction. The reactant reacting in the second reaction region 34 may be discharged out of the reactor housing 11 through the second tube outlet 32 and the second reactor outlet 18.

A first power supply 40 may be configured to supply power to the first reaction tube 20. That is, the first power supply 40 may be electrically connected to all the first reaction tubes 20 and may supply the same amount of power to all the first reaction tubes 20. The first power supply 40 may be an alternating current (AC) power supply or a direct current (DC) power supply.

A second power supply 42 may be configured to supply power to the second reaction tube 30. That is, the second power supply 42 may be electrically connected to all the second reaction tubes 30 and may supply the same amount of power to all the second reaction tubes 30. The second power supply 42 may be an AC power supply or a DC power supply.

The first power supply 40 and the second power supply 42 may be independently controlled. In particular, the amount of power supplied by the second power supply 42 to the second reaction tube 30 may be different from the amount of power supplied by the first power supply 40 to the first reaction tube 20. Accordingly, a temperature of the first reaction region 24 and a temperature of the second reaction region 34 may be controlled differently from each other, and the reaction occurring in the first reaction region 24 and the reaction occurring in the second reaction region 34 may be different from each other.

Sockets (not illustrated) may be mounted on one end and the other end of the first reaction tube 20, and the first power supply 40 may supply power to the first reaction tube 20 through the sockets. Similarly, sockets (not illustrated) may be mounted on one end and the other end of the second reaction tube 30, and the second power supply 42 may supply power to the second reaction tube 30 through the sockets. In addition, a cooling device is mounted on each of the sockets to cool the sockets.

An insulator 50 may surround at least parts of the first and second reaction tubes 20 and 30 to thermally insulate the first and second reaction tubes 20 and 30. As illustrated in FIG. 2, the insulator 50 may surround the entire first and second reaction tubes 20 and 30, but is not limited thereto, and may surround only parts of the first and second reaction tubes 20 and 30. Since the insulator 50 may thermally insulate the first and second reaction tubes 20 and 30 by surrounding the first and second reaction tubes 20 and 30, an unnecessary heat loss to the outside of the first and second reaction tubes 20 and 30 may be reduced, so that energy efficiency may be improved, and temperatures inside the first and second reaction tubes 20 and 30 may be efficiently and uniformly maintained.

In addition, the insulator 50 may electrically isolate the first and second reaction tubes 20 and 30 from external surroundings, thereby preventing safety accidents that may occur due to a current that may flow in the first and second reaction tubes 20 and 30.

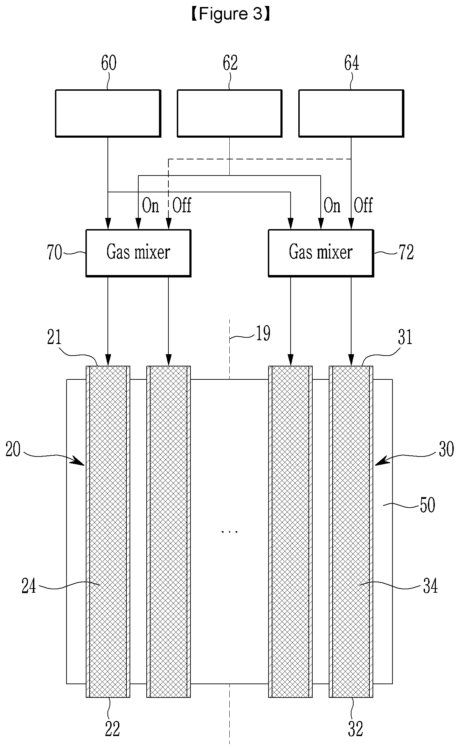

FIG. 3 illustrates an example of using the electrical heating reactor according to an embodiment of the present disclosure. In one example, a first reactant supply source 60 may be configured to supply steam, a second reactant supply source 62 may be configured to supply naphtha, and a third reactant supply source 64 may be configured to supply ethane. FIG. 3 illustrates a case where the first reaction region 24 and the second reaction region 34 are controlled to have the same temperature, whereby naphtha steam cracking occurs in both the first reaction region 24 and the second reaction region 34.

As illustrated in FIG. 3, the electrical heating reactor 10 may further include a first mixer 70 configured to receive first reactants from at least one of the first, second, and third reactant supply sources 60, 62, and 64, mix the first reactants, and supply the mixed first reactants to the first reaction tube 20, and a second mixer 72 configured to receive second reactants from at least one of the first, second, and third reactant supply sources 60, 62, and 64, mix the second reactants, and supply the mixed second reactants to the second reaction tube 30.

The first reactant supply source 60 may be configured to constantly supply steam to both the first and second mixers 70 and 72, the second reactant supply source 62 may be configured to selectively supply naphtha to the first and second mixers 70 and 72 under the control of a controller (not illustrated), and the third reactant supply source 64 may be configured to selectively supply ethane to the first and second mixers 70 and 72 under the control of the controller (not illustrated). In the example illustrated in FIG. 3, the first reactant supply source 60 may supply steam to both the first and second mixers 70 and 72, the second reactant supply source 62 may supply naphtha to both the first and second mixers 70 and 72, and the third reactant supply source 64 may not supply ethane to both the first and second mixers 70 and 72.

The first mixer 70 may receive steam from the first reactant supply source 60, receive naphtha from the second reactant supply source 62, mix steam and naphtha, and supply a mixture of steam and naphtha to the first reaction tube 20. The second mixer 72 may receive steam from the first reactant supply source 60, receive naphtha from the second reactant supply source 62, mix steam and naphtha, and supply a mixture of steam and naphtha to the second reaction tube 30. That is, the mixtures of steam and naphtha may be supplied to the first reaction region 24 and the second reaction region 34.

The controller may control the first and second power supplies 40 and 42 to control the first and second reaction regions 24 and 34 to have the same temperature. The mixtures of steam and naphtha may be supplied to both the first and second reaction regions 24 and 34, and the first and second reaction regions 24 and 34 may be controlled to have the same temperature, as a result of which the naphtha steam cracking may occur in both the first and second reaction regions 24 and 34.

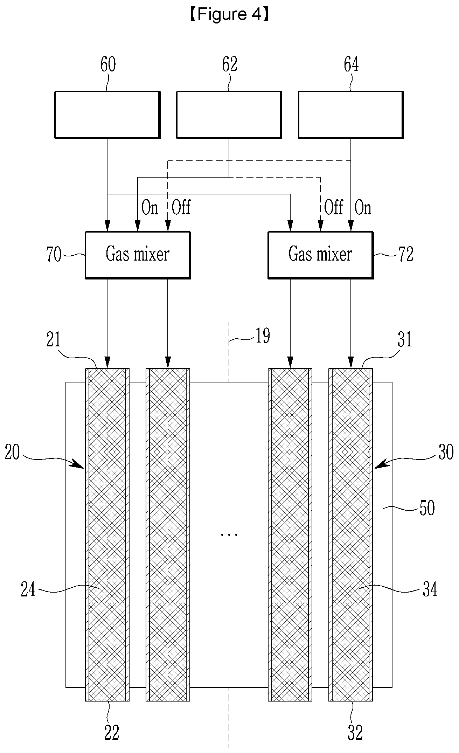

FIG. 4 illustrates another example of using the electrical heating reactor according to an embodiment of the present disclosure. FIG. 4 illustrates a case where the first reaction region 24 and the second reaction region 34 are controlled to have different temperatures, as a result of which the naphtha steam cracking may occur in the first reaction region 24 and ethane steam cracking may occur in the second reaction region 34.

As illustrated in FIG. 4, the first reactant supply source 60 may supply steam to both the first and second mixers 70 and 72, the second reactant supply source 62 may supply naphtha to the first mixer 70 but not to the second mixer 72, and the third reactant supply source 64 may supply ethane to the second mixer 72 but not to the first mixer 70.

The first mixer 70 may receive steam from the first reactant supply source 60, receive naphtha from the second reactant supply source 62, mix steam and naphtha, and supply a mixture of steam and naphtha to the first reaction tube 20. The second mixer 72 may receive steam from the first reactant supply source 60, receive ethane from the third reactant supply source 64, mix steam and ethane, and supply a mixture of steam and ethane to the second reaction tube 30. That is, the mixture of steam and naphtha may be supplied to the first reaction region 24, and the mixture of steam and ethane may be supplied to the second reaction region 34.

The controller may control the first and second power supplies 40 and 42 to control the first and second reaction regions 24 and 34 to have different temperatures. The mixture of steam and naphtha may be supplied to the first reaction region 24, the mixture of steam and ethane may be supplied to the second reaction region 34, and the first and second reaction regions 24 and 34 may be controlled to have different temperatures, as a result of which the naphtha steam cracking may occur in the first reaction region 24, and the ethane steam cracking may occur in the second reaction region 34.

FIGS. 3 and 4 illustrate a case where the electrical heating reactor 10 according to an embodiment of the present disclosure is used for at least one of the naphtha steam cracking and the ethane steam cracking, but examples of use of the electrical heating reactor 10 according to an embodiment of the present disclosure are not limited to the examples of FIGS. 3 and 4. In one example, the electrical heating reactor 10 may be used for a reaction in which the types of reactants supplied to the first and second reaction regions 24 and 34 are similar to each other and reaction temperatures are similar to each other. Examples of the reactions that satisfy such conditions may include, but are not limited to, methane steam reforming, methane dry reforming, and methane pyrolysis. In another example, the first reaction region 24 and the second reaction region 34 may be connected to a connection passage (not illustrated) outside the reactor housing 11. The reactant may be preheated in one of the first and second reaction regions 24 and 34, and the preheated reactant may be supplied to the other of the first and second reaction regions 24 and 34, so that a main reaction occurs in the other of the first and second reaction regions 24 and 34.

While this invention has been described in connection with what is presently considered to be practical embodiments, it is to be understood that the disclosure is not limited to the disclosed embodiments. On the contrary, it is intended to cover various modifications and equivalent arrangements included within the spirit and scope of the appended claims.

## Claims

1. An electrical heating reactor comprising: at least one first reaction tube having a first passage through which a reactant passes and configured to heat the reactant passing through the first passage;
at least one second reaction tube having a second passage through which a reactant passes and configured to heat the reactant passing through the second passage;
a first power supply configured to supply power to the at least one first reaction tube; and
a second power supply configured to supply power to the at least one second reaction tube.

2. The electrical heating reactor of claim 1, wherein
the first power supply and the second power supply are independently controlled.

3. The electrical heating reactor of claim 1, wherein
the first passage defines a first reaction region, and the second passage defines a second reaction region, and
the electrical heating reactor further comprises:
a first reactor inlet communicating with the first reaction region to supply the reactant to the first reaction region;
a first reactor outlet communicating with the first reaction region to discharge the reactant from the first reaction region;
a second reactor inlet communicating with the second reaction region to supply the reactant to the second reaction region; and
a second reactor outlet communicating with the second reaction region to discharge the reactant from the second reaction region.

4. The electrical heating reactor of claim 3, wherein
the first reaction region and the second reaction region do not communicate with each other inside the electrical heating reactor.

5. The electrical heating reactor of claim 3, further comprising:
a first mixer configured to receive a first type of reactants from first type reactant supply sources, mix the first type of reactants, and supply a mixture of the first type of reactants to the first reaction tube; and
a second mixer configured to receive the first type of reactants from the first type reactant supply sources, mix the first type of reactants, and supply a mixture of the first type of reactants to the second reaction tube.

6. The electrical heating reactor of claim 5, wherein
the first reaction region and the second reaction region are controlled to have the same temperature, and
the first type of reactants are supplied from each of the first and second mixers to the first reaction region and the second reaction region to cause the same reaction.

7. The electrical heating reactor of claim 3, further comprising:
a first mixer configured to receive a first type of reactants from first type reactant supply sources, mix the first type of reactants, and supply a mixture of the first type of reactants to the first reaction tube; and
a second mixer configured to receive a second type of reactants from second type reactant supply sources, mix the second type of reactants, and supply a mixture of the second type of reactants to the second reaction tube.

8. The electrical heating reactor of claim 7, wherein
the first reaction region and the second reaction region are controlled to have different temperatures, and
the first type of reactants are supplied from the first mixer to the first reaction region, and the second type of reactants are supplied from the second mixer to the second reaction region to cause different reactions at the same time.

9. The electrical heating reactor of claim 3, wherein
the at least one first reaction tube and the at least one second reaction tube are disposed in a length direction inside a reactor housing,
a partition wall is installed in the length direction inside the reactor housing to physically divide a space inside the reactor housing into first and second sections, and
the at least one first reaction tube is disposed in the first section, and the at least one second reaction tube is disposed in the second section.

10. The electrical heating reactor of claim 1, further comprising:
an insulator surrounding at least parts of the first and second reaction tubes to thermally insulate the first and second reaction tubes.
